# EUROPEAN PATENT APPLICATION

(11) **EP 1 612 694 A1**
(43) Date of publication of application: **04.01.2006**
(21) Application number: 05251444.5
(22) Date of filing: 10.03.2005
(51) Int. Cl.: G06F 15/78, G06F 15/80

(54) **Processor with a reconfigurable ALU array**

(30) Priority: 30.06.2004 JP 2004193578
(71) Applicant: FUJITSU LIMITED, Kawasaki-shi, Kanagawa 211-8588 (JP)
(72) Inventor: Uriu, Shiro Fujitsu Network Tech. Ltd., Yokohama-shi Kanagawa 22-0033 (JP); Wakayoshi, Mitsuharu Fujitsu Network Tech. Ltd., Yokohama-shi Kanagawa 22-0033 (JP)
(74) Representative: Stebbing, Timothy Charles

(57) **Abstract**

A processor executes a predetermined operation process by switching a connection structure between a plurality of arithmetic and logic unit modules. Each of the arithmetic and logic unit modules includes a plurality of arithmetic and logic units. The arithmetic and logic unit modules include a first arithmetic and logic unit module that includes a plurality of arithmetic and logic units that executes various operation processes, and a second arithmetic and logic unit module that includes a plurality of arithmetic and logic units of which executable operation processes are limited compared with the first arithmetic and logic unit module.

## Description

### CROSS-REFERENCE TO RELATED APPLICATIONS

This application is based upon and claims the benefit of priority from the prior Japanese Patent Application No.2004-193578, filed on June 30, 2004, the entire contents of which are incorporated herein by reference.

### BACKGROUND OF THE INVENTION

### 1) Field of the Invention

The present invention relates to a reconfiguration-type processor that performs a reconfiguration control over an arithmetic and logic unit (ALU) module.

### 2) Description of the Related Art

A conventional technology focusing attention on hardware for increasing computer's efficiency and speed is a reconfigurable technology. The reconfigurable technology allows part of hardware to be reconfigurable to flexibly support an application (software program).

Such a hardware-reconfiguring technology using filed programmable gate array (FPGA) is disclosed (see, for example, Japanese National Phase PCT Laid-Open Publication No. 7-503804). Also a technology in which the performance of an application is measured and a module is dynamically reconfigured according to the measurement results (see, for example, Japanese Patent Laid-Open Publication No. 2002-163150) is disclosed.

Furthermore, a method is disclosed in which arrangement information (configuration information) of a reconfigurable portion is previously generated, and with a plurality of read-only-memories (ROMs) having stored therein the configuration information being provided, the configuration information is read according to a process to be performed for reconfiguring a module (see, for example, Japanese Patent Laid-Open Publication No. 5-108347).

When such a reconfigurable technique is applied to a hardware architecture of a cluster structure including configuration information, an arithmetic and logic unit (ALU) (unit performing an arithmetic process such as four arithmetic operations and a logical operation) module of a reconfigurable type has to be equipped in a cluster. In that case, the configuration information is also disposed in the same cluster, and is sequentially read according to the process results of the ALU. The cluster is structured by an ALU block formed of a reconfigurable ALU module, a network, a memory, a counter, etc., and a sequencer (SQE) for controlling configuration definitions of these ALU module, network, memory, and counter.

However, to execute various applications, a highly-flexible ALU module of a reconfigurable type has to be equipped. With an ALU that is highly flexible in view of circuitry being equipped, the circuit area is increased and resource efficiency is decreased. Such an ALU module is a multifunctional ALU having many equipped functions, that is, for example, the one structured by arithmetic gates, such as those for AND, OR, addition and subtraction, an absolute-value operation, a normalizing process, multiplication, and zero decision, and a cumulative-sum operation circuit or the like for performing a cumulative-sum operation on the results of these arithmetic gates.

Also, to improve the process performance of the entire cluster, the internal structure of the sequencer is desired to be able to quickly reconfigure the ALU block in a simplified manner. That is, how the process of the sequencer responsible for controlling the configuration information required for reconfiguration is made efficient has an influence on the process performance of the cluster.

### SUMMARY OF THE INVENTION

It is an object of the present invention to solve at least the above problems in the conventional technology.

A processor according to one aspect of the present invention executes a predetermined operation process by switching a connection structure between a plurality of arithmetic and logic unit modules:
Each of the arithmetic and logic unit modules includes a plurality of arithmetic and logic units. The arithmetic and logic unit modules include a first arithmetic and logic unit module that includes a plurality of arithmetic and logic units that executes various operation processes; and a second arithmetic and logic unit module that includes a plurality of arithmetic and logic units of which executable operation processes are limited compared with the first arithmetic and logic unit module.

A processor according to another aspect of the present invention executes a predetermined arithmetic process by switching a connection structure between a plurality of arithmetic and logic unit modules under a control of a sequencer. Each of the arithmetic and logic unit modules having a plurality of arithmetic and logic units. The sequencer reconfigures the connection structure at an occasion of writing to a memory provided in the arithmetic and logic unit modules.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a structure of a cluster of a processor according to a first embodiment of the present invention;
Fig. 2 is a circuit diagram of an internal structure of a high-performance ALU module;
Fig. 3 is a block diagram of an internal structure of an ALU_A;
Fig. 4 is a circuit diagram of an internal structure of a simplified ALU module;
Fig. 5 is a circuit diagram of an internal structure of a comparator;
Fig. 6A is a block diagram of a structure of a sequencer unit according to a second embodiment of the present invention;
Fig. 6B is a diagram of details of configuration information;
Fig. 7 is a block diagram of an internal structure of a configuration controller; and
Fig. 8 is a table of decision details set in a decision register.

### DETAILED DESCRIPTION

Exemplary embodiments of a process according to the present invention are explained in detail with reference to the accompanying drawings. A cluster is configured by two units, an ALU block and a sequencer unit.

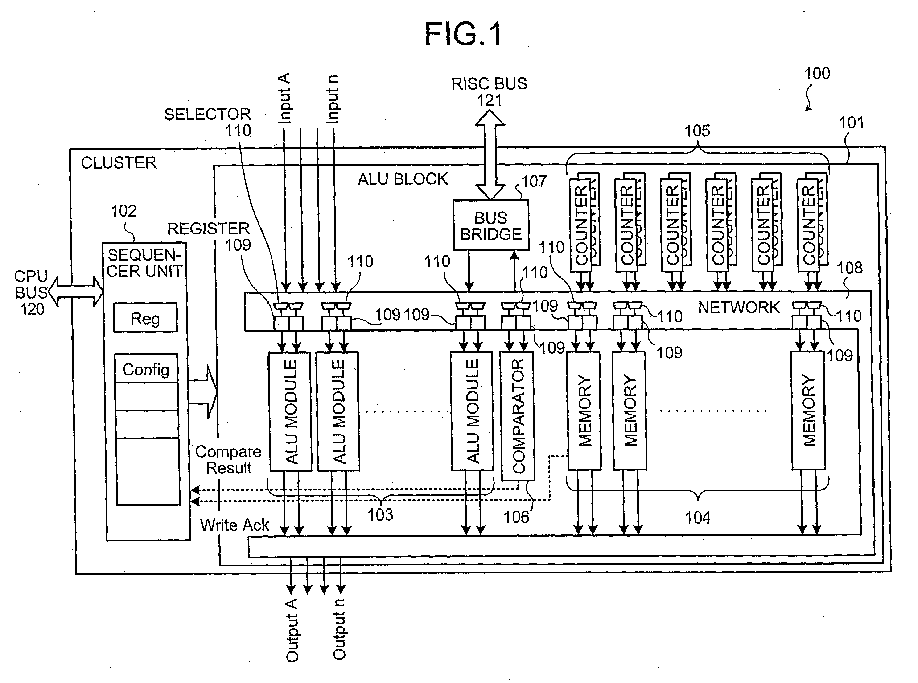

Fig. 1 is a block diagram depicting the structure of a cluster of the processor according to a first embodiment of the present invention. A cluster 100 includes an ALU block 101 that performs an actual process and a sequencer unit 102 that supplies configuration information for reconfiguration. In Fig. 1, only one cluster 100 is depicted. In practice, however, a plurality of clusters 100 are connected to one another via a central processing unit (CPU) bus 120 for distributed processing (concurrent processing) or the like.

The ALU block 101 includes a plurality of ALU modules 103 structured by various arithmetic elements, a plurality of memories 104 that read data to be processed and store processed data, a plurality of counters 105 that generate an address of each of the memories 104, a single comparator 106 that compares two input signals (condition decision), a bus bridge 107 connected to a reduced instruction set computing (RISC) bus 121, and a network 108. The counter 105 may generate an address to any of the memories 104 according to the arithmetic results of the ALU modules 103. The comparator 106 outputs a decision result (result of comparison) to the sequencer unit 102. Each memory outputs Write Ack to the sequencer unit 102.

The network 108 is supplied with a plurality of signals (Inputs A to n), and the arithmetic results from the ALU modules 103 and others are output as a plurality of signals (Outputs A to n). This network 108 includes each of the ALU modules 103, the comparator 106, registers 109 respectively provided to input units of the signals to the memories 104, and selectors 110.

Then, based on the configuration information output from the sequencer unit 102 according to the arithmetic details and the like, a connection pattern among a combination (selection) of the ALU modules 103, the memories 104, and the comparator 106 is reconfigurable. A change in this connection pattern can be made by the selectors 110 provided to the network 108.

The ALU modules 103 provided in the ALU block 101 includes high-performance ALU modules and simplified ALU modules. For example, of 17 bits of bus used as input data to the ALU modules, 16 bits are data bits and the remaining one bit is a bit indicative of validity or invalidity (hereinafter referred to as a "Token bit"). Here, the network 108 with this bus of 17 bits switches the connections among the ALU modules 103, the comparator 106, and the memories 104.

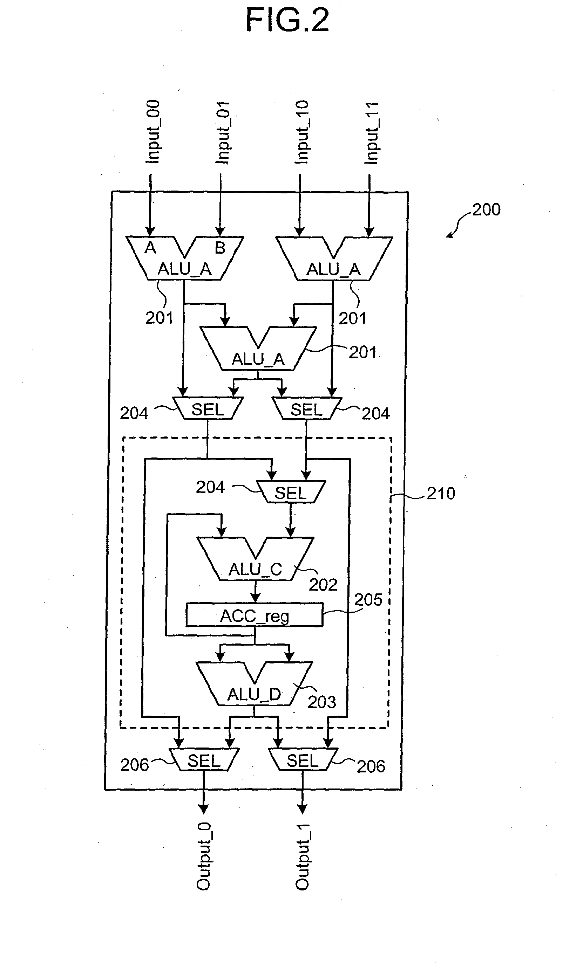

Fig. 2 is a circuit diagram of the internal structure of the high-performance ALU module. An ALU module 200 has incorporated therein three types of ALUs, that is, ALU_A 201, ALU_C 202, and ALU_D 203, a selector 204, and an ACC register (ACC_reg) 205 for accumulation of arithmetic results. The ALU_A 201 is a multifunctional ALU with many incorporated functions. As shown in the drawing, in the high-performance ALU module 200, two ALU_A 201 and 201 provided at an input stage are supplied with data of four systems (Input_00, _01, _10, and _11), and outputs of two systems (Output_0 and _1) are produced by the selector 206 provided at an output stage.

An AND-OR arithmetic circuit 210 including the ALU_C 202 and the ALU_D 203 is a circuit for cumulative sum of the arithmetic results at the ALU_A 201 and others, and can be applied to an AND-OR operation often used in a media-related process, such as Fourier transformation.

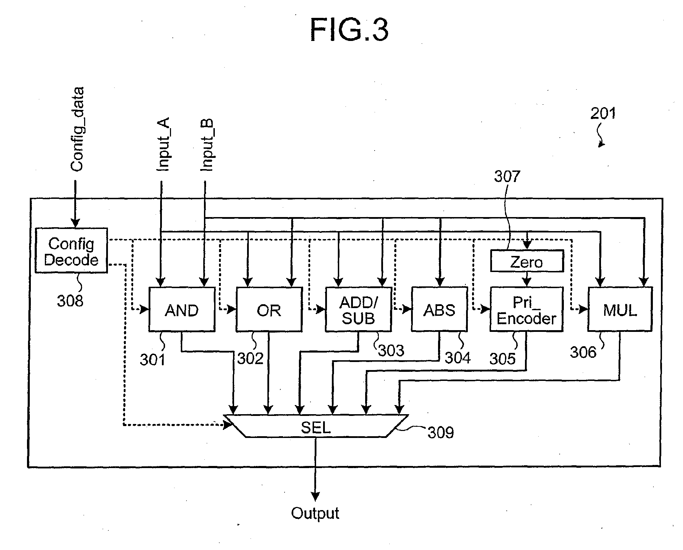

Fig. 3 is a block diagram of the internal structure of the ALU_A. The ALU_A 201 includes arithmetic gates 301 through 307 and a config decoder 308 that sets arithmetic details to the arithmetic gates based on input configuration information (Config_data).

Each arithmetic gate includes an AND gate 301 that performs an AND operation on two pieces of input data (Input_A, _B), an OR gate 302 that performs an OR operation, an ADD/SUB gate 303 that performs addition or subtraction under the control of the config decoder 308, an ABS gate 304 that performs an absolute-value operation, a primary encoder (Pri_Encoder) 305 that performs a normalizing process, a MUL gate 306 that performs multiplication, and a Zero gate 307 that performs zero decision. A selector (SEL) 309 selects any one of outputs from these arithmetic gates 301 through 306 under the control of the config decoder 308. When supplied with only either one of two pieces of data (Input_A, _B), the ALU_A 201 can pass this data.

The ALU_202 shown in Fig. 2 is an addition-purpose ALU that adds two pieces of input data. The ALU_203 performs a rounding process or an input-passing process on two pieces of input data. Which of a rounding process or an input-passing process is to be performed is defined by configuration setting.

These ALU_A 201, ALU_C 202, and ALU_D 203 each can set whether to perform an operation on input data with or without code based on the configuration information. Other than that, with the configuration information, application of a saturation operation can be also set.

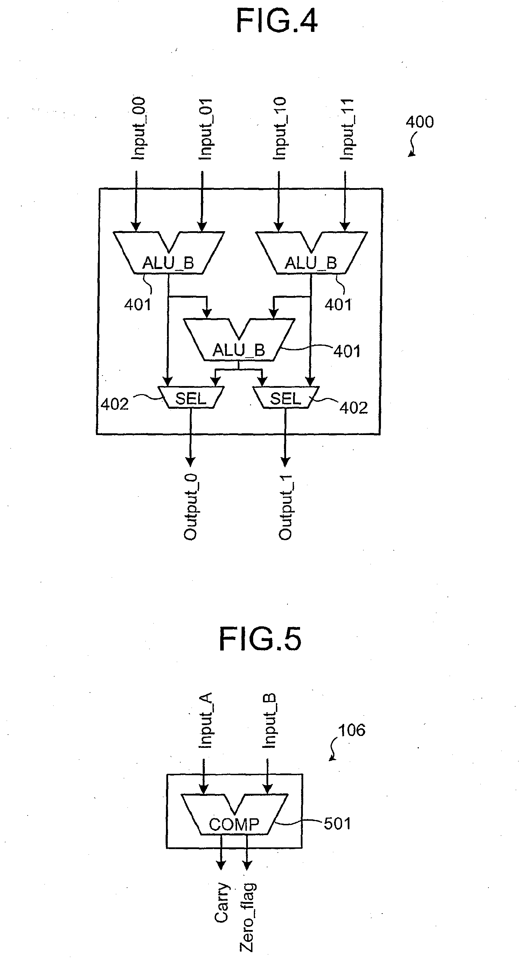

In the simplified ALU module, multifunctional functions included in the high-performance ALU module 200 are simplified to reduce the circuit size. Fig. 4 is a circuit diagram of the internal structure of the simplified ALU module.

The simplified ALU module 400 is not provided with the AND-OR arithmetic circuit 210 included in the high-performance ALU module 200 (see Fig. 2), and therefore does not have an AND-OR function. This simplified ALU module 400 includes an ALU_B 401 similar to the ALU_A 201 (see Fig. 3) but without a multiplication function of the MUL gate 306, and a selector 402. Also for the ALU_B 401, whether to perform an operation with or without code and designation of a saturation operation can be set based on the configuration information. As shown in the drawing, in the simplified ALU module 400, two ALU_B 401 and 401 provided at an input stage are supplied with data of four systems (Input_00, _01, _10, and _11), and outputs of two systems (Output_0 and _1) are produced by the selector 402 provided at an output stage.

Fig. 5 is a circuit diagram of the internal structure of the comparator. The comparator 106 includes a subtracter (COMP) 501. The comparator 106 is provided specifically for condition decision by comparing two inputs (Input_A and _B) to determine which is larger or smaller or whether they are equal to each other. The decision result is reported to the sequencer unit 102 (see Fig. 1), and the time of reporting can be taken as an occasion for switching the configuration.

The subtracter 501 in the comparator 106 outputs Carry indicative of under-flow and Zero_flag indicating that the subtraction result is zero. Carry and Zero_flag output from the comparator 106 are equivalent to the decision result (result of comparison, see Fig. 1) to the sequencer unit 102. Based on the configuration information, it is possible to set whether the subtraction details in the subtracter 501 as A-B or B-A with the inputs (Input_A and _B). Also, it is possible to set designation of an operation with code. With the single comparator 106 being provided inside the ALU block 101, an output source of the decision result occurring as a result of executing an arithmetic process is the single comparator 106. Then, at the sequencer unit 102, which is an output destination of the decision result, reconfiguration of the ALU block 101 can be easily performed based on only the input of the decision result of the single comparator 106.

The ALUs (201, 202, 203, and 401) provided inside the ALU modules 200 and 400 and the comparator 106 are each added with a token bit indicative of validity or invalidity of the relevant input. While performing an operation on the input data and outputs the operation result, the ALU also has to indicate validity or invalidity of the operation result. Therefore, the ALU generates and adds a token bit. A logic for generating a token bit is any one of the following schemes from (1) to (3).
(1) When both of two inputs have a valid token, a valid token is added to each of their operation results for output.
(2) When either one of two inputs has a valid token, a valid token is added to its operation result for output.
(3) Either of the two inputs in the above (1) or (2) is to be fixedly monitored. Such fixation can be set at the time of designing and kept as it is, or can be changed by configuration setting. Based on the data with the token bit added in the above manner, data writing to the memories 104 is controlled.

Here, as for the token bit, when the data to be process is stored in any one of the memories 104, the counter 105 that generates a read address for that memory 104 adds a token bit for the address information. In the memory 104, only the address with a valid token bit is to be read, and a valid token bit is then added to the read data. Also, in the case of the structure where the data to be processed is passed between the clusters 100, when data is externally supplied to one cluster 100 from another cluster 100, a token bit is added from the other cluster 100 for input.

Each of the ALU modules (the ALU_A 201, the ALU_B 401, the ALU_C 202, the ALU_D 203, and the subtracter 501) described above can change its internal structure and functions based on the configuration information from the sequencer unit 102. With this configuration information, it is possible in each module to perform designation of an operation with code, designation of a saturation operation (designation of a halt in arithmetic process), designation of an arithmetic process in the ALU_A 201, the ALU_B 401, the ALU_C 202, and the ALU_D 203, designation of a subtraction direction (A-B or B-A) for the subtracter 501. It is also possible in each of the selectors 206, 309, and 402 to perform designation of output selection.

In the internal structure of the ALU block 101 according to the first embodiment described by using Fig. 1, for example, ten ALU modules 103, ten memories 104, and the single comparator 106 are disposed. Of the total of ten ALU modules 103, two modules are high-performance ALU modules 200, and eight modules are simplified ALU modules 400. With the minimum one comparator 106 being disposed, the number of high-performance ALU modules 200 can be reduced for achieving an efficient arithmetic operation.

Particularly, with the single comparator 106, the decision result at the comparator 106 is reported to the sequencer unit 102, and the time of reporting can be taken as an occasion for switching the configuration. At the time of a loop process (for example, an IF statement in the C language) often used in various applications (computer programs), the sequencer unit 102 reconfigures the connection structure of the ALU modules 103, the memories 104, and the comparator 106 inside the ALU block 101 according to the decision result obtained by using the comparator 106. At this time, the ALU modules 103 can perform an arithmetic operation mostly with the use of the simplified ALU modules 400 and even without the use of ten modules as exemplified above all of which are high-performance ALU modules 200 having a cumulative-sum function. With this, even without using the high-performance ALU modules 200, the ALU connection structure can be changed according to an arithmetic operation required for the relevant application, thereby performing an efficient arithmetic process.

According to the first embodiment, the high-performance ALU modules, the simplified ALU modules, and the comparator are disposed inside the ALU block, and in combination of these, reconfiguration can be achieved. With this, a cluster structure capable of flexibly supporting various applications and improving resource efficiency can be obtained. Also, the ALU modules are configured not only solely by the high-performance ALU modules, but also partially by the simplified ALU modules. Thus, with an arithmetic process being made more efficient, improvement in area efficiency, power saving, and low cost can be achieved. Also, the arithmetic processing speed itself can be improved.

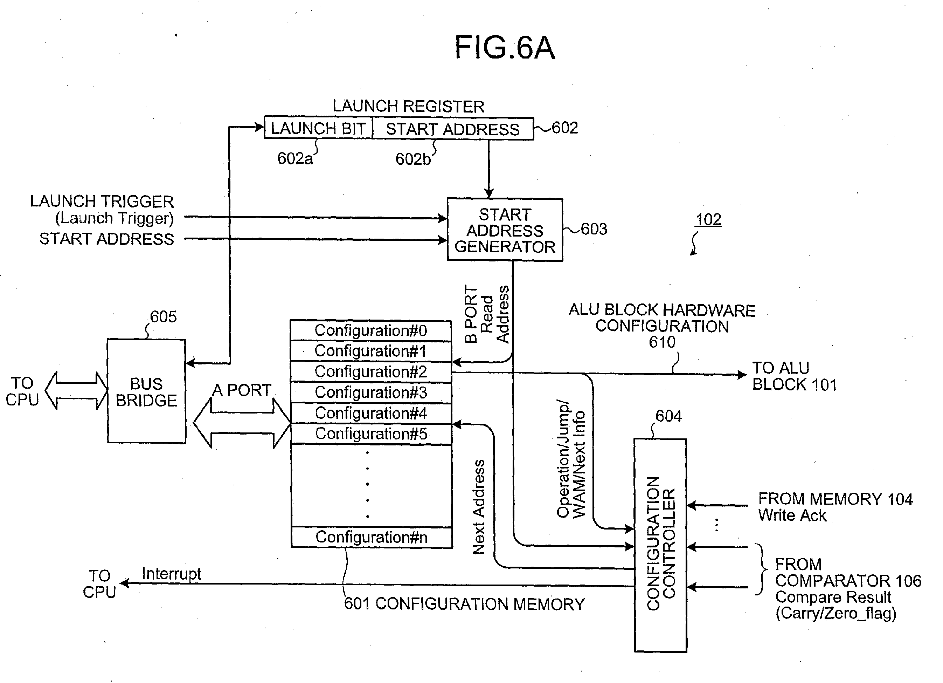

The timing (occasion) of reconfiguring the processor executed by the sequencer unit 102 described in the first embodiment (see Fig. 1) is described. Fig. 6A is a block diagram of the structure of a sequencer unit according to a second embodiment of the present invention.

The sequencer unit 102 includes a configuration memory 601 storing a plurality of pieces of configuration (structure of the ALU block 101) information (Configuration #0 through n), a launch register 602 that controls a launch from an external CPU (not shown), a start-address generator 603 that designates a first piece of configuration information (any one of Configuration #1 through n) as the cluster, a configuration controller 604 that determines the next configuration information based on the state and designates the next address (Next Address) subsequent to the relevant configuration information stored in the configuration memory 601, and a bus bridge 605 provided with respect to the CPU.

The configuration memory 601 includes an A port with respect to the bus bridge 605 and a B port with respect to the start-address generator 603 and the configuration controller 604. The start-address generator 603 designates via the B port a start address to be read. From the B port to the ALU block 101 and the configuration controller 604, configuration information for hardware configuration (ALU-block hardware configuration 610, which will be described further below) is output. The configuration controller 604 manages the address read from the configuration memory 601 and, at the time of reconfiguration, designates the next address subsequent to that of the configuration information via the B port of the memory 601.

The start-address generator 603 is supplied with a start address and a launch trigger. The configuration controller 604 is supplied with Write Ack from the relevant memory 104 and the decision result (Compare Result (Carry and Zero_flag)) from the comparator 106. The configuration controller 604 outputs an interrupt (Interrupt) to the CPU.

There are two occasions for reconfiguring the function of the ALU block 101, that is, 1. when a sequential process is completed and the procedure goes to the next process, and 2. the next process is changed according to the decision result obtained through condition decision. In the latter case, reconfiguration is performed according to the decision result (true or false) of condition decision.

The case is described where the occasion is taken as 1. "when a sequential process is completed and the procedure goes to the next process". The process in the ALU block 101 is supposed to be performed such that the data to be processed is read from the relevant memory 104 and the process result at the ALU block 101 is stored to the memory 104. Based on this supposition, a process is completed upon writing in the memory. At this occasion, the structure of the processor is changed.

The case is described where the occasion is taken as 2. "the next process is changed according to the decision result obtained through condition decision". In this case, a change is made correspondingly to the decision result of condition decision. This decision is made by the comparator 106 described above. The comparator 106 includes the subtracter 501 that performs a subtracting process on the two input signals A and B (A-B or B-A) (see Fig. 5). With the use of two types of signal, that is, Carry, which is the subtraction result (decision result: result of comparison, see Fig. 1) obtained by the comparator 106, and Zero_flag, a report is sent to the sequencer unit 102.

Therefore, after the sequencer unit 102 defines an arbitrary configuration, the following two events are controlled as occasions for next configuration. One is 1. when the last processed data at any time of the configuration of the ALU block 101 is written in any memory 104. The other is 2. the occasion is made according to the decision result (Carry and Zero_flag) of condition decision at the comparator 106.

The process of the cluster 100 is performed by the launch register 602. By the external CPU, a start address 602b of the first configuration information (for example, Configuration #0) is designated. The launch register 602 sets a launch bit 602a. At this occasion, the first configuration information stored in the configuration memory 601 is read to the memory 104. The first configuration information is set in the ALU block 101. Furthermore, according to operation code in the configuration information, which will be described below, conditions for the next configuration (reconfiguration of the processor) are defined.

The cluster 100 can be launched through a scheme other than the above. For example, the structure can be such that the start address and the start event occasion are received from the outside of the cluster 100. This start event occasion can be used as the setting of the launch bit 602a of the launch register 602.

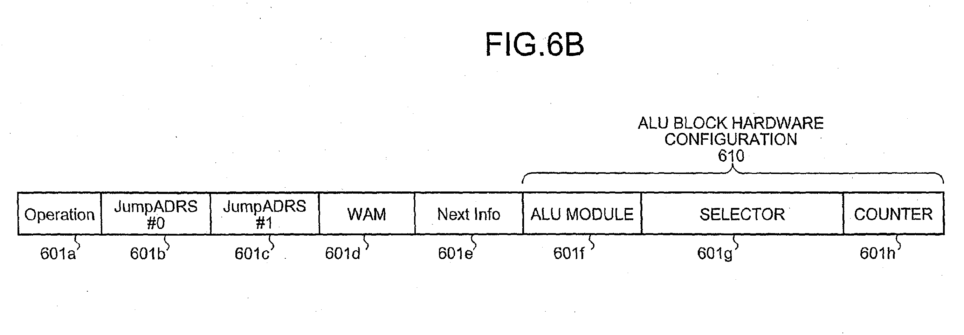

Fig. 6B is a diagram of details of configuration information. The configuration information stored in the configuration memory 601 has items of data strings 601a through 601h depicted in Fig. 6B. The items of the data strings 601a through 601h are each described.

The item called operation code (Operation) 601 a is composed of two bits for defining the state of transition from the current configuration to the next configuration.

The items called jump addresses (JumpADRS #0, 1) 601b and 601c are jump addresses according to the decision result of condition decision made by the comparator 106. Each of these is to designate an address to be read from the configuration memory 601 subsequently to the current configuration, and is used at the time of reconfiguration based on the decision result. Designation of the jump addresses 601b and 601c is such that either one of the jump addresses, 601b, for example, designates an address corresponding to a result of true from the comparator 106, while the other jump address 601c designates an address corresponding to a result of false from the comparator 106.

The item called Write Address Mask (WAM) 601d is used, when reconfiguration is performed based on a memory write (Write) event from the ALU block 101, for designating a memory 104 inside the ALU block 101 so that a memory write event therefrom is to be monitored.

The item called reconfiguration condition decision information (Next Info) 601e is used, when reconfiguration is performed based on the decision result of condition decision made by the comparator 106 provided to the ALU block 101, for designating an operation according to the decision result.

The item called ALU block hardware configuration 610 includes the item called ALU module 601f that defines the structure of the ALU module 103, the item called selector 601g that defines the connection structure of the selector 110, and the item called definition counter 601h that defines the structure of the counter 105.

Of the configuration information described above, each item other than the ALU block hardware configuration 610 (601a through 601e) is sent to the configuration controller 604 in the sequencer unit 102, and is used as information for determining the next configuration address.

The condition for transition from the current configuration to the next configuration is designated by the operation code 601 a contained in the configuration information. The operation set in the operation code 601a is defined as the following (1) to (4).

### (1) When the operation code=00

A No operation (NOP) process is performed. In this case, without changing the state at the ALU block 101 or waiting for the event occasion, the procedure goes to the address of the next configuration information (Configuration #0 through n) in the relevant configuration memory 601 in the next clock cycle, and then follows the setting details of the newly-read operation code 601a.

### (2) When the operation code=01

In this case, a sequential process is performed. After the current configuration information is transferred to the ALU block 101 side, the procedure makes a transition to the address of the next configuration memory 601 in the next clock cycle at the occasion of having performed a process of writing in any memory 104 provided in the ALU block 101. Whether to take Write Ack from a plurality of memories 104 as occasions is designated by the configuration information.

### (3) When the operation code=10

In this case, a complete instruction process is performed. The current configuration information is transferred to the ALU block 101 side and then an interrupt of the process end is reported to the CPU as the occasion of a write process in the relevant memory 104 of the ALU block 101. With this, the process at the cluster 100 side temporarily ends. The memory 104 whose Write Ack is taken as the occasion is designated by the configuration information. This case is used when part of the entire process required for executing the application is performed by using the cluster 100.

### (4) When the operation code=11

In this case, a condition-branch instructing process is performed. The current configuration information is transferred to the ALU block 101 side, and then the procedure waits for an input of the decision result (Compare result) of condition decision made by the comparator 106 of the ALU block 101. By taking the input of this decision result as the occasion, configuration information corresponding to a different branch destination for each decision result is selected for reconfiguration.

The configuration controller 604 performs centralized control over reconfiguration in the ALU block 101.

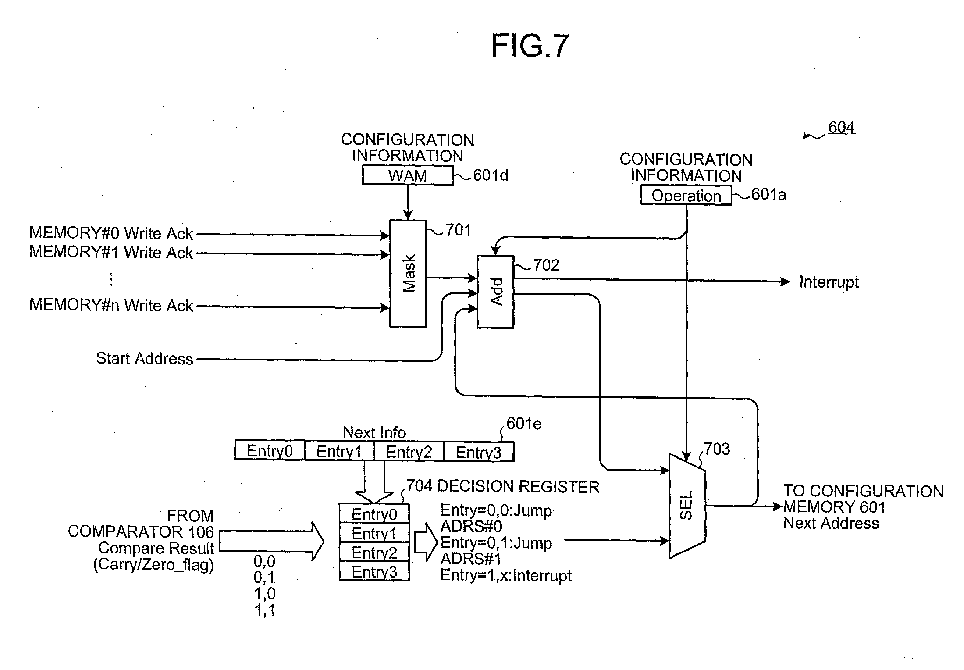

Fig. 7 is a block diagram of the internal structure of the configuration controller. Following the operation code (see Fig. 6B), the configuration controller 604 selects an address to be read subsequent to the address read from the current configuration memory 601. This configuration controller 604 includes a masking unit (Mask) 701, an adder (Add) 702, a selector (SEL) 703, and a decision register 704.

The masking unit 701 is set with a mask value indicated by the item 601 d of the write address mask (WAM) contained as the item of the configuration information. Of Write Ack input from the memories (taken as memories #0 to #n) provided to the ALU block 101, Write Ack from the memory 104 coinciding with the item 601 d of the WAM is accepted for output to the adder (Add) 702.

The item value of the operation code (Operation) 601a contained in the configuration information is output to the adder (Add) 702 and the selector 703. The adder 702 refers to the details of the operation code 601 a to increment (add 1 to) the current address for each clock cycle when the value allows addition, that is, "00, 01, 10", and then outputs the result to the selector 703. When a start address is input from the start address generator 603, this adder 702 starts addition from the start address. Also, when the operation code 601a indicates "10", an interrupt (Interrupt) is output to the external CPU.

The selector 703 changes a switch not shown to be connected to the adder 702 when the input operation code 601a indicates "00, 01, 10". With this, a route looping between the adder 702 and the selector 703 is set. With the address incremented by the adder 702 being taken as Next Address, a read address of the relevant configuration memory 601 is designated. This selector 703 changes the switch not shown to the decision register 704 side when the input operation code 601 a indicates "11 ". With this, a read address of the relevant configuration memory 601 is designated by taking the address indicated by the decision result of the decision register 704 as Next Address.

The decision register 704 is set with a plurality of entries (Entry 0 through 3) indicated by the Next Info 601e contained in the configuration information. Each of the entries 0 through 3 has a bit for comparison of two bits. Then, when the decision result of condition decision output from the comparator 106 (result of comparison (Carry of one bit and Zero_flag of one bit) is input, setting of the entries set in the decision register 704 for comparison is searched on a table in combination of two bits, and the procedure then jumps to a jump destination of the next address set for each entry. The jump destination of the next address is a jump address (JumpADRS #0 or JumpADRS #1, see Fig. 6B) contained in the configuration information. An output of the decision register 704 is input to the selector 703. The selector 703 then outputs the decision result from the decision register 704 as Next Address.

The next address (Next Address) is designated by the configuration controller 604 according to the operation code in the following four manners from (1) to (4).

### (1) When the operation code=00

During a period in which the operation code=00 continues, a process of taking a value obtained by adding 1 to the current address (or the start address) as Next Address continues.

### (2) When the operation code=01

In this case, because of sequential execution, a value obtained by adding 1 to the current address (or the start address) is taken as Next address at the time when a return of Write Ack from the memory 104 designated by the WAM 601d is confirmed.

### (3) When the operation code=10

In this case, a normal completion interrupt (Interrupt) is reported to the CPU at the time when a return of Write Ack from the memory 104 designated by the WAM 601d is confirmed

### (4) When the operation code=11

In this case, based on the decision result of condition decision from the comparator 106, the decision register 704 is referred to. Then, a jump address defined as the configuration according to the result of referring to the decision register 704 (either one of JumpADRS #0 and JumpADRS #1, see Fig. 6B) is taken as Next Address.

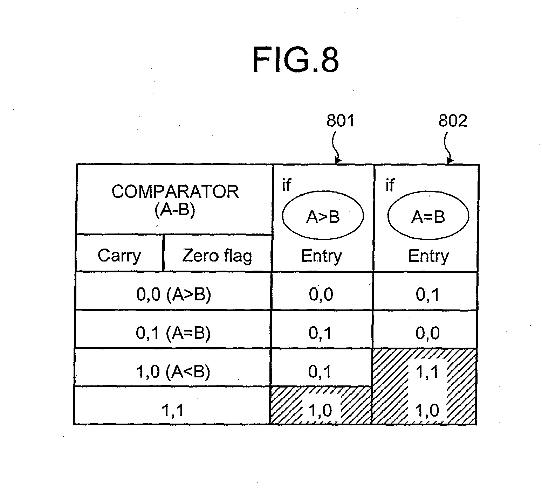

Fig. 8 is a table of decision details set in a decision register. It is assumed herein that subtraction performed by the comparator 106 is performed by using two inputs for subtraction of A-B. At this time, Compare Result (the value of Carry and the value of Zero_flag) output from the comparator 106 becomes 0, 0 where A>B, 0, 1 where A=B, and 1, 0 where A<B. As the case other than the above (abnormal output), the result indicates 1, 1.

Also, for the entries (Entry 0 through 3) indicated by Next Info 601 e, it is assumed, for example, that an entry 801 is set to be true where A>B and false in other cases. In this case, Compare Result (Carry and Zero_flag) output from the comparator 106 becomes 0, 0 where A>B, which indicates true (Entry=00, see Fig. 7), and then the address set in JumpADRS #0 (601 b) is taken as Next Address. Also, the entry is false (Entry=01) where A=B (0, 1) and A<B (1, 0), and then the address set in JumpADRS #1 (601 c) is taken as Next Address. In other cases, that is, in a state where the decision result of the comparator 106 indicates a logically-impossible output or abnormality, the entry indicates Entry=1, x (1, 0 and 1, 1). If Carry and Zero_flag both indicate 1,1, the entry indicates Entry=1,0, and then Interrupt is output.

Similarly, it is assumed that another entry 802 is set to be true only where A=B and false in other cases. In this case, Compare Result (Carry and Zero_flag) output from the comparator 106 becomes 0, 0 only where A=B, which indicates true (Entry=00, see Fig. 7), and then the address set in JumpADRS #0 (601b) is taken as Next Address. Also, where A>B (0, 1), the entry indicates false (Entry=01), and then the address set in JumpADRS #1 (601c) is taken as Next Address. Here, even if A<B (1, 1) or the output of the comparator 106 is logically impossible (Entry=1, 0), Interrupt is output for report to the outside.

As such, the decision register 704 has a function of a look-up table (LUT). When the operation code indicates 11, the decision register 704 is referred to, thereby easily obtaining the next address (Next Address) according to the decision result of the comparator 106.

According to the second embodiment, a transition from the state of the current configuration to the next configuration can be appropriately performed. Particularly, since the switching occasion of the hardware of the ALU block to be reconfigured can be quickly and easily detected, the process performance can be improved. Also, since the hardware structure can be switched according to the decision result of condition decision using a comparator, condition decision does not have to be made by a plurality of ALU modules, thereby improving area efficiency on hardware and achieving space saving and power saving.

According to the present invention, it is possible to achieve a cluster structure flexibly supporting various applications and capable of improving resource efficiency. With this, an effect of providing hardware excellent in area efficiency, power saving, cost, and operation speed can be attained.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A processor that executes a predetermined operation process by switching a connection structure between a plurality of arithmetic and logic unit modules, each of the arithmetic and logic unit modules having a plurality of arithmetic and logic units, wherein the arithmetic and logic unit modules include
a first arithmetic and logic unit module that includes a plurality of arithmetic and logic units that executes various operation processes; and
a second arithmetic and logic unit module that includes a plurality of arithmetic and logic units of which executable operation processes are limited compared with the first arithmetic and logic unit module.

2. The processor according to claim 1, further comprising a third arithmetic and logic unit module that includes a comparator that compares input signals, and outputs a result of comparison.

3. The processor according to claim 2, further comprising a sequencer that switches the connection structure, and sets a new connection structure between the arithmetic and logic unit modules, wherein
the sequencer sets the new connection structure at an occasion of an output of the result of comparison from the comparator.

4. The processor according to claim 1, wherein the arithmetic and logic units generate, based on a plurality of input signals and an input of a token bit indicating either of validity and invalidity of a result of the operation processes on the input signals, a new token bit indicating post-operation-process signals and either of the validity and the invalidity of the result of the operation processes.

5. The processor according to claim 3, wherein the sequencer outputs configuration information for setting details of the operation process to the arithmetic and logic units.

6. The processor according to claim 1, wherein the first arithmetic and logic unit module includes at least a plurality of arithmetic and logic units that performs a cumulative-sum operation process.

7. The processor according to claim 6, wherein the arithmetic and logic units include
a plurality of operation gate circuits that performs a logical multiplication, a logical addition, an addition, a subtraction, an absolute-value operation, a normalizing process, a multiplication, and a zero decision, respectively; and
a selector circuit that selects an output of any one of the operation gate circuits.

8. The processor according to claim 7, wherein the operation gate circuits of the second arithmetic and logic unit module does not have functions of a cumulative-sum operation process and a multiplication.

9. A processor that executes a predetermined arithmetic process by switching a connection structure between a plurality of arithmetic and logic unit modules under a control of a sequencer, each of the arithmetic and logic unit modules having a plurality of arithmetic and logic units, wherein
the sequencer reconfigures the connection structure at an occasion of writing to a memory provided in the arithmetic and logic unit modules.

10. The processor according to claim 9, wherein
one of the arithmetic and logic unit modules is a comparator that compares input signals, and outputs a result of comparison, and
the sequencer reconfigures the connection structure, at an occasion of an output of the comparator, according to the result of comparison.

11. The processor according to claim 10, wherein
the sequencer includes
a configuration-information storing unit that stores a plurality of pieces of configuration information having a plurality of preset connection structures between the arithmetic and logic unit modules; and
a configuration controlling unit that reads one of the pieces of configuration information stored in the configuration-information storing unit, and controls the connection structure based on the preset connection structures, and
each of the pieces of configuration information includes designation information that designates either of a time of writing to the memory and the configuration information to be read at a next reconfiguration based on the result of comparison.

12. The processor according to claim 11, wherein
the designation information is an address for designating one of the pieces of configuration information, and
the configuration-information storing unit adds the address to the configuration information.

13. The processor according to claim 11, wherein the configuration controlling unit includes
an adder that increments the address of the configuration information to be read next based on the designation information and an occasion of writing to the memory;
a deciding unit that decides, based on the result of comparison, the address of the configuration information to be read next; and
a selecting unit that selects either of an address after addition by the adder and an address decided by the deciding unit.

14. The processor according to claim 13, wherein
the arithmetic and logic unit modules include a plurality of the memories, and
the configuration-controlling unit includes a memory masking unit that selects one of the memories based on the configuration information newly read by designation of the designation information, decides an occasion of writing to the memory selected, and causes the adder to increment the address.

15. The processor according to claim 14, wherein
the configuration information includes memory selection information for selecting the one of the memories, and
the memory masking unit decides writing to the memory selected as an occasion of new reconfiguration based on the memory selection information.

16. The processor according to claim 13, wherein the deciding unit includes decision information indicating the configuration information to be read next by the configuration controlling unit according to a plurality of the results of comparison.

17. The processor according to claim 16, wherein
the configuration information includes information for deciding a condition, and
the deciding unit reads the information for deciding a condition, and sets the information read as the decision information in a table format.
